# FASCICULE DE BREVET EUROPEEN

(11) **EP 1 931 527 B1**
(45) Date de publication et mention de la délivrance du brevet: **18.04.2012**
(21) Numéro de dépôt: 06793879.5
(22) Date de dépôt: 28.09.2006
(51) Int. Cl.: B60G 21/00, B60G 3/26, B60G 7/02

(54) **DISPOSITIF DE SUSPENSION POUR VÉHICULE**
FAHRZEUGAUFHÄNGUNGSVORRICHTUNG
VEHICLE SUSPENSION DEVICE

(30) Priorité: 28.09.2005 FR 0510061
(43) Date de publication de la demande: 18.06.2008
(73) Titulaire: Société de Technologie Michelin, 63000 Clermont-Ferrand (FR); Michelin Recherche et Technique S.A., 1763 Granges-Paccot (CH)
(72) Inventeur: VAXELAIRE, Alain, F-63540 Romagnat (FR)
(74) Mandataire: Lasson, Cédric Y. M.
(86) Numéro de dépôt international: PCT/EP2006/066822
(87) Numéro de publication internationale: WO 2007/036547

(56) Documents cités:
- EP-A- 0 506 141
- FR-A- 2 813 240
- US-A- 5 284 353

## Description

La présente invention concerne la liaison au sol des véhicules automobiles, en particulier les dispositifs de suspension et de support de roue permettant un degré de liberté de carrossage de la roue par rapport aux éléments de suspension.

L'invention concerne plus particulièrement la suspension des véhicules de tourisme (passenger cars) et des véhicules de compétition automobile.

Les dispositifs de suspension ont deux fonctions principales qui doivent être assurées simultanément à tout moment lors du fonctionnement. L'une de ces fonctions est de suspendre le véhicule, c'est à dire permettre des oscillations sensiblement verticales de chaque roue. L'autre fonction de ces dispositifs est de guider la roue c'est à dire contrôler la position angulaire du plan de roue.

On appelle "plan de roue" le plan, lié à la roue, qui est perpendiculaire à l'axe de la roue et qui passe par le centre de l'aire de contact statique au sol lorsque la roue est verticale. Le plan de roue ainsi défini est donc solidaire de l'axe de roue et son orientation varie comme celle de la roue.

.La position angulaire du plan de roue par rapport à la caisse du véhicule est définie par deux angles, l'angle de carrossage et l'angle de braquage. L'angle de carrossage d'une roue est l'angle séparant, dans un plan transversal perpendiculaire au sol, le plan de roue du plan médian du véhicule.

L'angle de braquage d'une roue est l'angle séparant, dans un plan horizontal parallèle au sol, le plan de roue du plan médian du véhicule.

Le plan de carrossage peut être défini comme le plan orthogonal au sol, transversal au véhicule et passant par le centre de l'aire de contact de la roue sur le sol. C'est le plan dans lequel a lieu le mouvement de carrossage.

La demande de brevet EP 1070609 décrit un dispositif de suspension permettant un degré de liberté de carrossage de la roue sensiblement indépendant des mouvements de suspension. Les mouvements de suspension sont permis grâce à un système multi-bras ou à double triangle. Les variations de carrossage sont provoquées par des déplacements des points d'articulation des bras par rapport à la caisse du véhicule.

La demande internationale WO 01/72572 décrit un dispositif de suspension dans lequel c'est le support de roue qui permet un degré de liberté de carrossage de la roue par rapport aux éléments de suspension. Ce degré de liberté est contrôlé soit de manière active, par exemple par un vérin en fonction de paramètres de roulage du véhicule, soit de manière passive par les efforts qui s'exercent sur la roue dans l'aire de contact.

La demande internationale WO 04/058521 décrit un autre dispositif de support de roue permettant un degré de liberté de carrossage de la roue par rapport aux éléments de suspension. Les moyens de carrossage comprennent une triple charnière liée d'une part au porte-roue et d'autre part aux éléments de suspension, ladite triple charnière comprenant deux joues et deux leviers, chacun des leviers étant respectivement solidaire de l'une des deux joues, les leviers étant liés d'une part au porte-roue et d'autre part aux éléments de suspension.

La demande de brevet EP 0506 141 décrit un dispositif de suspension comprenant une coulisse liée dans sa partie supérieure à la caisse du véhicule.

Dans les dispositifs de support et de suspension décrits dans les demandes de brevets citées plus haut, on a ajouté, par rapport à des dispositifs de suspension conventionnels, un degré de liberté afin de permettre le carrossage de la roue par rapport à la caisse. Cette mobilité supplémentaire peut être réalisée de plusieurs manières différentes mais il est constant que le fait d'augmenter le nombre de pièces et le nombre de rotules ou de pivots à tendance à dégrader la rigidité et/ou la robustesse du système complet. Ces systèmes sont également relativement coûteux. D'autre part, le volume occupé par les systèmes de suspension sur les véhicules automobiles est sans cesse remis en cause au profit de l'habitacle ou des roues.

Un objectif de l'invention est de proposer un dispositif de suspension qui permette de pallier au moins certains des inconvénients précités.

Cet objectif est atteint par un dispositif de suspension d'une roue par rapport à la caisse d'un véhicule, ledit dispositif autorisant un mouvement de suspension sensiblement vertical et un mouvement de carrossage du porte-roue par rapport à la caisse du véhicule, le dispositif comprenant une coulisse et un bras inférieur, la coulisse comprenant une partie supérieure et une partie inférieure mobiles l'une par rapport à l'autre, la partie supérieure étant liée à la caisse et la partie inférieure étant liée au porte-roue, le dispositif comprenant en outre un basculeur articulé dans le plan de carrossage d'une part au bras inférieur et d'autre part par l'intermédiaire d'une bielle au porte-roue, le basculeur étant en outre articulé dans le plan de carrossage à la partie inférieure de la coulisse.

De préférence, la bielle est articulée respectivement au basculeur et au porte-roue par l'intermédiaire de liaisons pivot. De préférence encore, la partie inférieure de la coulisse est articulée au porte-roue par l'intermédiaire d'une liaison rotule. Dans ce cas, la partie inférieure de la coulisse est de préférence articulée au basculeur par l'intermédiaire d'une liaison rotule, un bras de reprise limitant la rotation de la partie inférieur de la coulisse.

Alternativement, la partie inférieure de la coulisse peut être articulée au basculeur par l'intermédiaire d'une liaison pivot.

De préférence, le bras inférieur est un triangle, le basculeur étant articulé au triangle par l'intermédiaire d'une liaison rotule, le dispositif comprenant en outre une bielle de direction agissant directement sur le basculeur.

De préférence, le ressort de suspension agit au sein de la coulisse.

L'invention concerne également un essieu pour véhicule comprenant pour chaque roue de l'essieu un dispositif de suspension selon l'invention.

De préférence, l'essieu comprend en outre des moyens de liaison en carrossage rendant le carrossage de chaque roue dépendant du carrossage de l'autre roue de l'essieu.

De préférence, les moyens de liaison en carrossage assurent en outre la fonction anti-roulis de l'essieu.

De préférence encore, la fonction anti-roulis est assurée par une barre anti-roulis transversale sollicitée en torsion, la liaison en carrossage étant assurée par un mouvement transversal de la barre anti-roulis par rapport à la caisse.

L'invention concerne également un véhicule automobile comprenant un essieu selon l'invention.

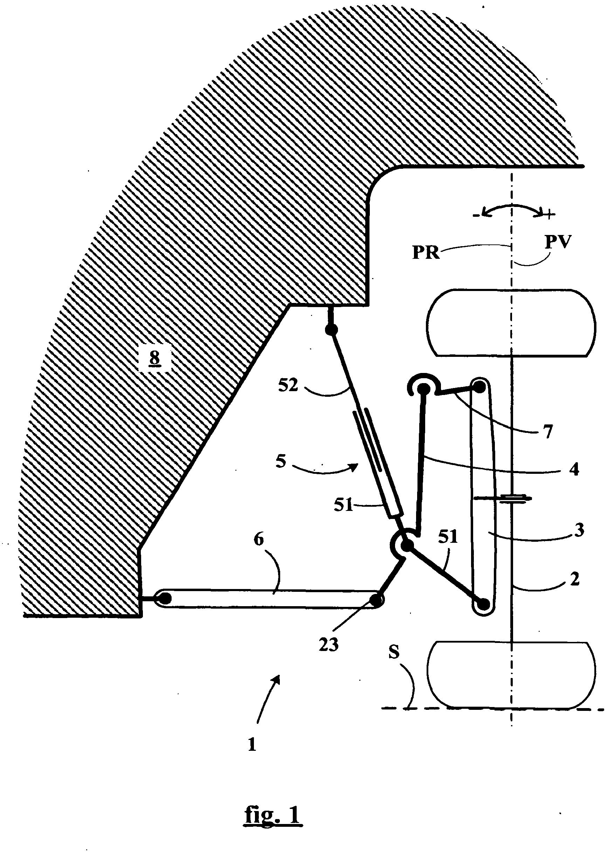

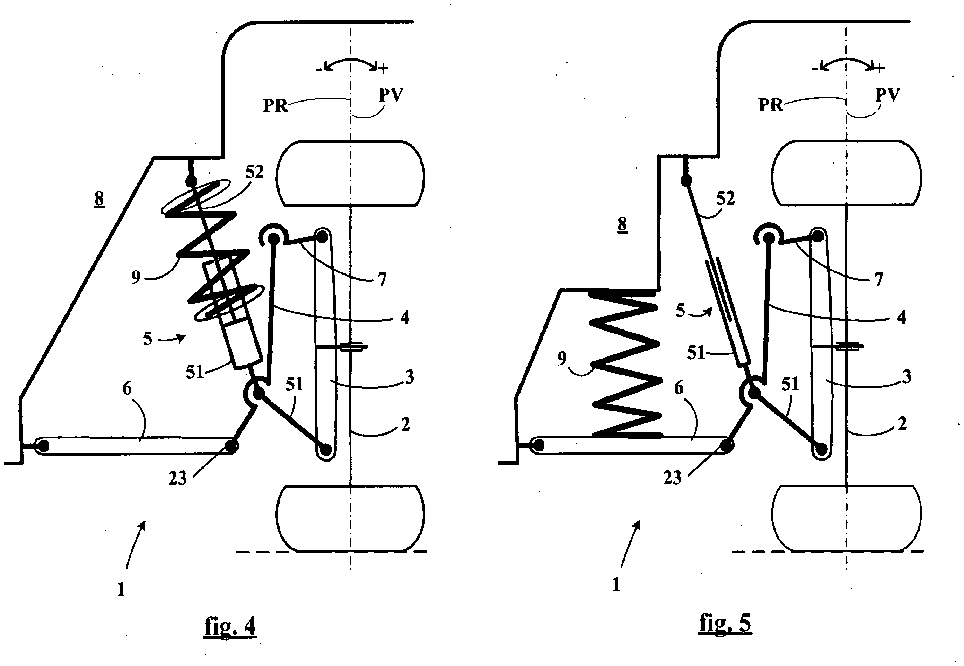

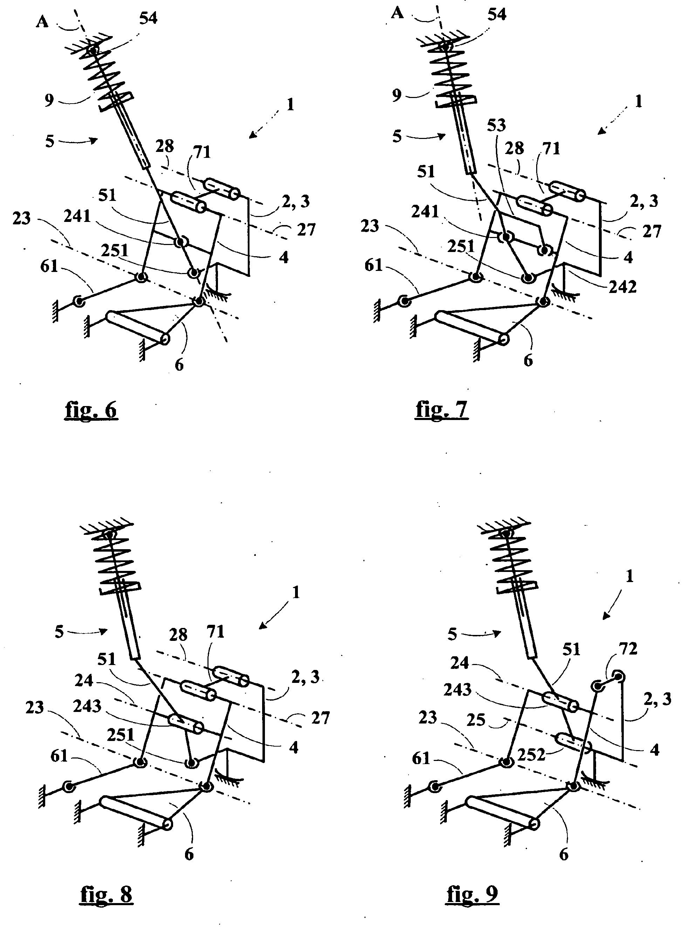

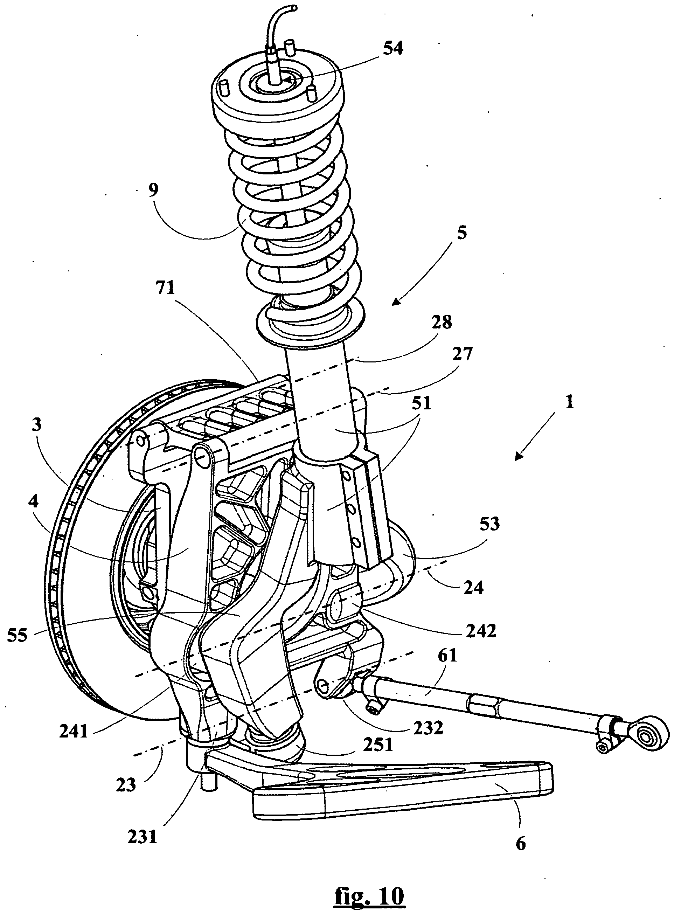

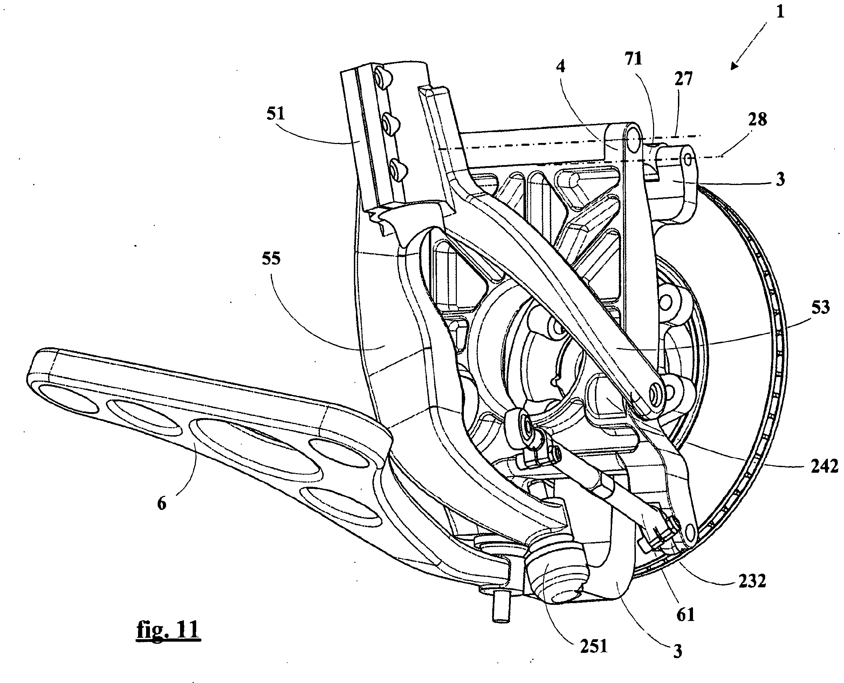

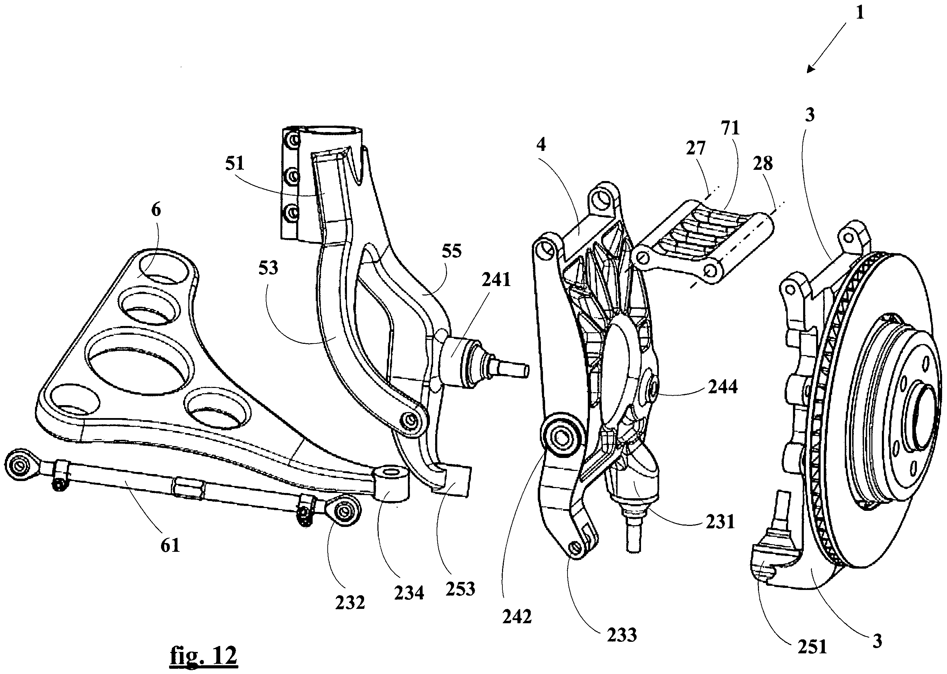

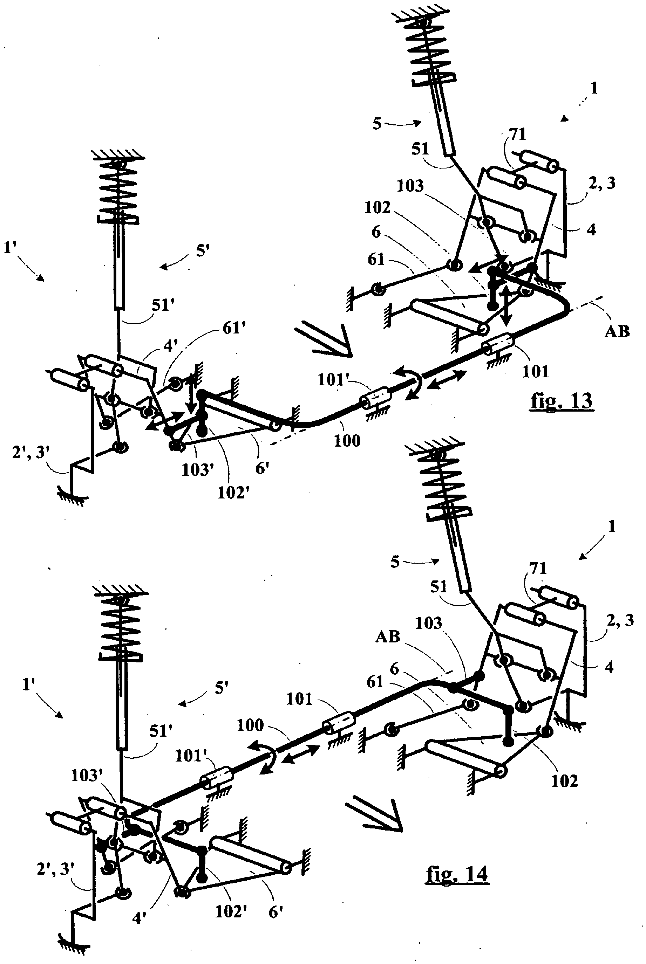

L'invention sera mieux comprise grâce à la description des figures qui représentent respectivement:
■ Figures 1 à 3: vues schématiques selon une direction longitudinale du dispositif de suspension de l'invention dans trois positions de carrossage différentes.
■ Figures 4 et 5: vues schématiques selon une direction longitudinale de deux modes de réalisation différents du dispositif de suspension de l'invention.
■ Figures 6 à 9: vues schématiques en perspective de différents modes de réalisation du dispositif.
■ Figures 10 et 11: vues en perspective d'un mode de réalisation préféré du dispositif.
■ Figure 12: vue éclatée et en perspective du mode de réalisation des figures 10 et 11.
■ Figures 13 à 20: vues schématiques en perspective d'essieux selon différents modes de réalisation préférés de l'invention.

Sur les différentes figures, les éléments identiques ou similaires portent les mêmes numéros de références. Leur description n'est donc pas reprise systématiquement.

A la figure 1, on a représenté un dispositif de suspension selon l'invention. Le dispositif 1 comprend une coulisse 5 et un bras inférieur 6. La coulisse 5 comprend une partie supérieure 52 liée à la caisse 8 et une partie inférieure 51 liée au porte-roue 3. Le mouvement de suspension verticale de la roue 2, c'est à dire le mouvement vertical du porte-roue 3 par rapport à la caisse 8 du véhicule est permis par le mouvement relatif des deux parties de la coulisse. Le système de suspension comprend en outre un basculeur 4 articulé dans le plan de carrossage d'une part au bras inférieur 6 et d'autre part au porte-roue 3 par l'intermédiaire d'une bielle 7. Le basculeur 4 est de plus articulé dans le plan de carrossage à la partie inférieure 51 de la coulisse. Sur cette figure, le carrossage est représenté nul (c'est à dire que plan de la roue PR correspond au plan vertical PV perpendiculaire au sol S).

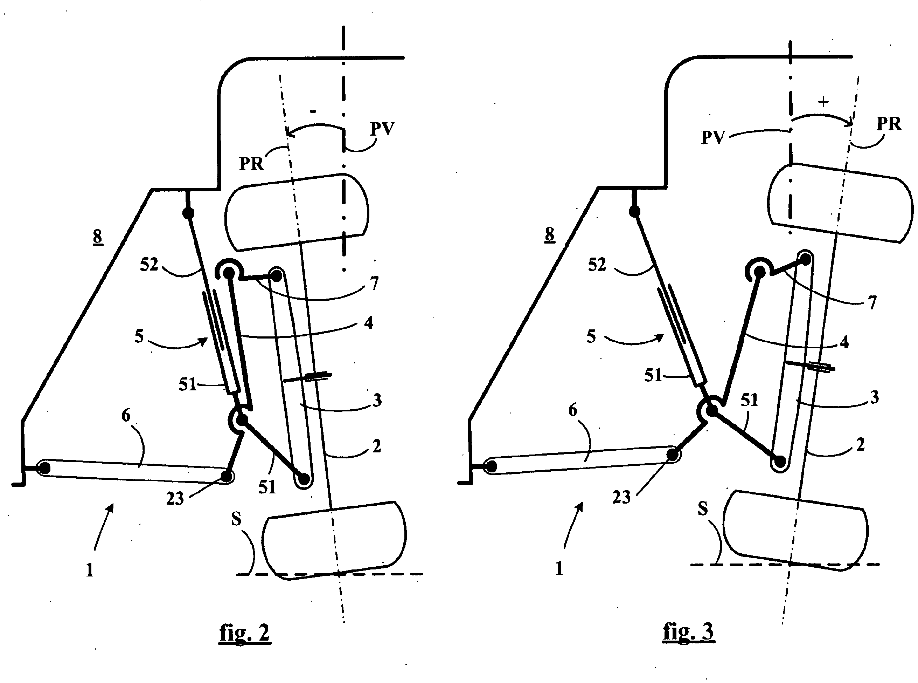

Les figures 2 et 3 montrent le dispositif de la figure 1 dans différentes positions de carrossage. A la figure 2, la roue est inclinée vers l'intérieur du véhicule (le carrossage est donc négatif). A la figure 3, la roue est inclinée vers l'extérieur du véhicule (le carrossage est donc positif). Comme on le voit bien en comparant les figures, le mouvement de carrossage de la roue par rapport à la caisse est lié aux oscillations du basculeur 4 par rapport à la coulisse 5 et au bras inférieur 6.

A la figure 4, on a représenté schématiquement le fait que le ressort de suspension 9 peut être associé à la coulisse 5 et constituer ainsi une jambe de force de manière connue en soi. Alternativement, comme cela est représenté à la figure 5, le ressort de suspension 9 peut être indépendant de la coulisse 5 et agir par exemple directement entre la caisse 8 et le bras inférieur 6.

Aux figures 6 à 9, on a représenté en perspective et très schématiquement différents exemples de configurations possibles du dispositif de suspension selon l'invention. Pour simplifier le dessin, l'ensemble formé par la roue 2 et le porte-roue 3 est en particulier représenté comme un élément rigide unique prenant appui sur le sol.

Ces différents exemples de configurations ont en commun l'emploi d'un bras inférieur 6 en forme de triangle associé à une bielle de pince ou de direction 61 et d'une jambe de force 5 combinant la coulisse et le ressort de suspension 9.

Dans le mode de réalisation de la figure 6, la partie inférieur 51 de la coulisse comporte une première liaison rotule 241 avec le basculeur 4 et une deuxième liaison rotule 251 avec le porte-roue 3. La bielle 71 comporte une première liaison pivot selon l'axe 27 avec le basculeur 4 et une deuxième liaison pivot selon l'axe 28 avec le porte-roue 3. Les axes 27 et 28 sont de préférence parallèles et sensiblement horizontaux. Ces deux liaisons pivot permettant de transmettre les efforts de braquages du porte-roue vers le bras inférieur 6 et la biellette 61 par l'intermédiaire de la bielle 71. L'axe 23 est l'axe autour duquel oscille le basculeur 4 par rapport au bras inférieur 6 et à la biellette de direction 61.

De préférence, dans cette configuration, le point d'attache supérieur 54 de la coulisse à la caisse du véhicule est aligné avec les rotules 241 et 251 et avec l'axe A de la coulisse. Cette condition géométrique permet de garantir que les mouvements de carrossage et les mouvements de suspension demeurent indépendants de la rotation de la jambe de force.

Alternativement, si cette condition géométrique n'est pas remplie, la partie inférieure 51 de la jambe de force peut comporter un bras de reprise de couple 53 apte à limiter ladite rotation (et donc ses effets). Cette alternative est représentée à la figure 7. Le bras de reprise 53 peut prendre appui sur le basculeur 4 par l'intermédiaire d'une liaison adaptée. Bien qu'on ait représenté ici une liaison rotule 242, un simple appui suffit et évite tout hyperstatisme. La raideur de cette liaison peut être très inférieure à celle de la rotule 241. Le bras de reprise 53 peut être rigidement lié à la coulisse comme illustré ici mais il peut également être articulé sur la coulisse, pourvu que ce bras permettre de limiter la rotation de la coulisse.

La figure 8 représente un mode de réalisation alternatif à celui de la figure 7. La différence concerne justement l'articulation de la jambe de force (c'est à dire de sa partie inférieure 51) sur le basculeur 4. Cette articulation utilise ici un pivot 243 fonctionnant selon un axe 24. Ce pivot assure donc la tenue en rotation de la coulisse en lieu et place du bras 53 de la figure 7. Cette configuration exige, du fait de son caractère hyperstatique, une bonne précision dans la réalisation des pivots et rotules. De préférence, les axes 23, 24, 27 et 28 sont parallèles et sensiblement horizontaux.

La configuration de la figure 9 utilise également une liaison pivot 243 d'axe 24 entre la partie inférieure 51 de la jambe de force et le basculeur 4 mais en outre une liaison pivot 252 d'axe 25 entre la jambe de force et le porte-roue 3. La bielle 72 peut alors être articulée entre le basculeur et le porte-roue par de simples liaisons ponctuelles (rotules ou équivalents fonctionnels). Dans cette configuration, les efforts de braquage de la roue sont donc transmis du porte-roue 3 vers le bras inférieur 6 et la biellette 61 par l'intermédiaire de la partie inférieure 51 de la coulisse. Ceci est une différence avec les configurations des figures 6 à 8 dans lesquelles c'est la bielle 71 qui assure cette transmission. De préférence, dans la configuration de la figure 9, les axes 23, 24 et 25 sont parallèles et sensiblement horizontaux.

Aux figures 10 à 12, on a représenté selon différentes vues un mode de réalisation du dispositif de suspension selon l'invention. Ce mode de réalisation correspond plus particulièrement au principe décrit à la figure 7, il est ici spécialement adapté pour une roue avant motrice et directrice d'un véhicule de tourisme. La roue n'est pas représentée pour simplifier la lecture des dessins mais l'homme du métier pourra se fier à la position du disque de frein pour appréhender la disposition des différents éléments. Le bras inférieur de suspension est ici un triangle 6 et le braquage de la roue est contrôlé par une biellette de direction 61 placée en avant du triangle.

Sur ces figures, on peut apercevoir la forme particulière de la jambe de force 5 et surtout de sa partie inférieure 51. La partie inférieure 51 de la jambe de force 5 comprend une corne 55 s'étendant jusqu'à son articulation (par une rotule 251) sur le porte-roue 3. Cette corne est également articulée dans sa partie centrale au basculeur 4. par l'intermédiaire d'une rotule 241. La partie inférieure 51 de la coulisse 5 comprend un bras de reprise 53 également lié au basculeur 4. Le rôle de ce bras est de contrôler la rotation de la coulisse comme décrit à la figure 7. La partie inférieure 51 comporte de manière connue en soi un assemblage par chape avec le combiné ressort-amortisseur. Afin d'établir la comparaison avec les principes exposés aux figures 1 à 4, notons que la partie inférieure 51 de la coulisse 5 regroupe ici la corne 55, le bras 53 et le corps de l'amortisseur. La partie supérieure 52 correspond essentiellement à la tige de l'amortisseur télescopique. Ces deux parties sont mobiles l'une par rapport à l'autre afin de procurer le degré de liberté de suspension verticale du véhicule. De plus, le braquage de la roue s'accompagne d'une rotation de la partie inférieure 51 autour de la tige de la jambe de force.

La bielle 71 relie le basculeur 4 au porte-roue 3 par l'intermédiaire des axes 27 et 28 et assure ainsi la transmission des efforts de braquage depuis le porte-roue vers la biellette de direction 61. La biellette de direction 61 est liée par l'intermédiaire d'une rotule 232 au basculeur 4. Le basculeur est d'autre part lié au triangle inférieur 6 par une rotule 231. L'axe 23 est donc défini par ces deux rotules, c'est l'axe autour duquel peut osciller le basculeur par rapport à la caisse.

On voit également bien (particulièrement à la figure 11) que cette configuration permet le passage d'un arbre de transmission entre la corne 55 et le bras 53 ainsi qu'au centre d'un évidemment prévu dans le basculeur 4.

La figure 12 montre en vue éclatée les éléments essentiels de ce mode de réalisation afin de faciliter la compréhension de cette configuration préférée. Lorsque le dispositif est assemblé, la rotule 232 de la biellette de direction 61 est fixée dans la chape 233 du basculeur 4, la rotule inférieure 251 du porte-roue 3 est fixée à l'extrémité 253 de la corne 55, la rotule 241 de la corne 55 est fixée à l'oeil 244 du basculeur 4, la rotule inférieure 231 du basculeur 4 est fixée à l'extrémité 234 du bras inférieur 6, le bras de reprise 53 est lié au basculeur 4 par l'articulation 242 et la bielle 71 est fixée par son axe 28 au porte-roue 3 et par son axe 27 au basculeur 4.

Sur cette vue éclatée, on voit en particulier mieux l'articulation 242 qui lie le bras de reprise 53 au basculeur 4. Cette articulation est de préférence élastomérique et relativement souple afin d'autoriser de petits déplacements sans générer d'efforts importants. Au contraire, les rotules 241, 231 et 251 sont de préférence très rigides car elles conditionnent la précision du guidage de la roue, en particulier en carrossage et en braquage. Pour la même raison, les pivots de la bielle 71 sur le basculeur 4 et sur le porte-roue 3 sont de préférence d'une grande rigidité, par exemple réalisés par des paliers lisses ou des roulements à billes, à aiguilles ou à rouleaux.

Les figures 13 à 18 représentent des exemples particuliers d'essieux selon l'invention. Un essieu selon l'invention comporte pour chaque roue un dispositif de suspension (1 et 1') selon l'invention. De préférence, les mouvements de carrossage des deux roues de l'essieu sont en outre liés par l'intermédiaire de moyens de liaison en carrossage par exemple comme ceux décrits dans la demande publiée WO 05/021294 ou dans la demande déposée sous le numéro FR 04/06930.

De préférence encore, la liaison en carrossage est assurée par l'intermédiaire de la translation de la barre anti-roulis de l'essieu.

Aux figures 13 à 18, on a ainsi représenté différents modes de réalisation d'une caractéristique préférentielle des dispositifs de suspension selon l'invention consistant à lier les mouvements de carrossage d'une roue par rapport à l'autre roue du même essieu par l'intermédiaire d'un déplacement transversal de la barre anti-roulis.

Les figures 13 à 18 montrent des essieux reprenant pour chaque roue d'un train avant ou arrière le schéma de la figure 7. Admettons que l'avant du véhicule se trouve sur la droite des figures.

A la figure 13, une barre anti-roulis 100 relie les triangles inférieurs 6 et 6' afin de transférer une partie de la charge d'une roue vers l'autre en cas de débattement de suspension différent de manière connue en soi. Pour cela, la barre anti-roulis 100 est guidée en rotation et en translation selon l'axe AB par rapport à la caisse par des supports 101 et 101' et reliée à chaque triangle par des tirants verticaux 102 et 102'. Selon une caractéristique préférée de l'invention, la barre anti-roulis assure également une fonction de liaison en carrossage. Pour cela, des tirants horizontaux 103 et 103' lient la barre anti-roulis aux deux basculeurs 4 et 4'. Les oscillations de carrossage des basculeurs provoquent une translation (selon l'axe AB) de la barre anti-roulis et sont ainsi rendues dépendantes l'une de l'autre. Sur cet exemple, l'axe de pivotement AB de la barre anti-roulis se trouve devant l'essieu et les tirants horizontaux agissent sur les tirants verticaux.

A la figure 14, la barre anti-roulis se trouve derrière l'essieu et les tirants horizontaux (103, 103') agissent directement sur la barre, non loin de son axe de pivotement AB.

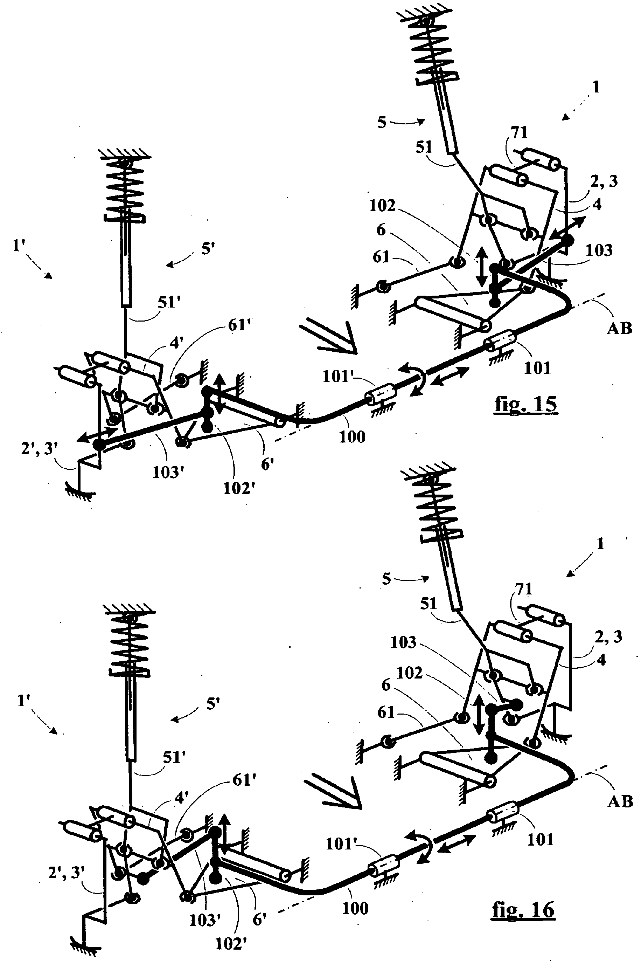

A la figure 15, la barre anti-roulis se trouve devant l'essieu et les tirants horizontaux (103, 103') sont liés aux porte-roues 3 et 3'. Ils agissent sur la barre par l'intermédiaire des tirants verticaux (102, 102').

A la figure 16, les tirants horizontaux (103, 103') sont liés aux parties inférieures 51 et 51' des coulisses. Ils agissent sur la barre par l'intermédiaire des tirant verticaux (102, 102'), c'est à dire qu'ils les utilisent comme levier amplifiant les efforts transmis à la barre et réduisant la course transversale de la barre dans ses supports.

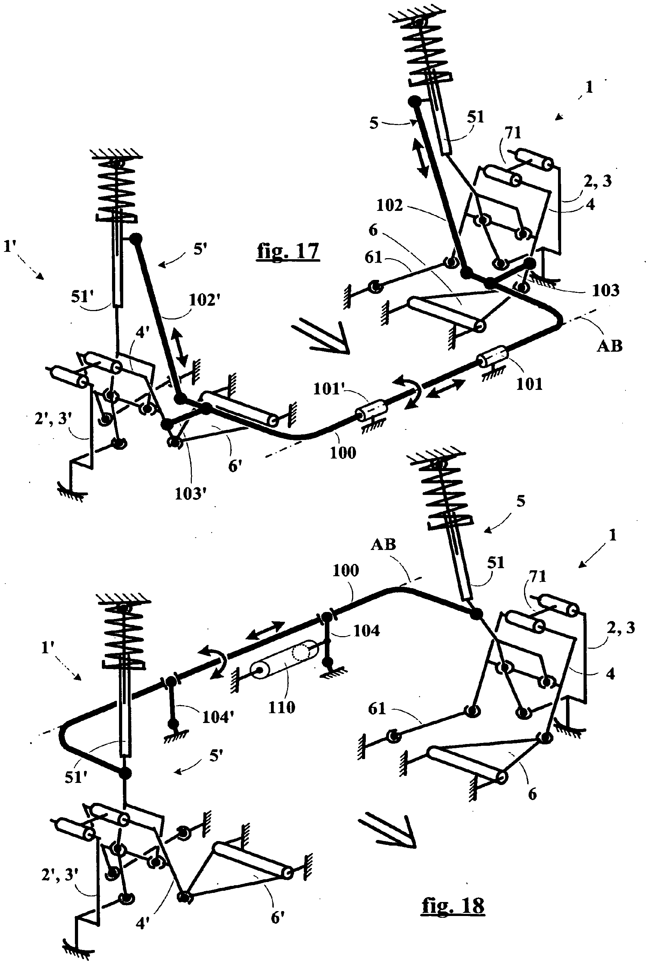

A la figure 17, les tirants horizontaux (103, 103') sont liés aux basculeurs 4 et 4'. Ils agissent directement sur la barre. Les tirant verticaux (102, 102') sont liés à la partie inférieure de la jambe de force, par exemple au corps de l'amortisseur.

A la figure 18, la barre anti-roulis se trouve derrière l'essieu. Elle est directement liée aux parties inférieures 51 et 51' sans tirant, ni vertical ni horizontal. Les supports de la barre anti-roulis par rapport à la caisse sont également différents en ce qu'ils utilisent des biellettes sensiblement verticales 104 et 104'. A la figure 18, on a représenté en outre un vérin 110 apte à influencer les mouvements d'oscillation de la biellette 104, c'est à dire la translation de la barre anti-roulis 100 et donc les mouvements de carrossage des roues de l'essieu. Ce vérin peut être un actionneur commandé (par exemple en fonction de paramètres de roulage du véhicule) ou un simple amortisseur passif.

Les figures 13 à 18 illustrent quelques configurations possibles de la liaison en carrossage réalisée par l'intermédiaire de la translation de la barre anti-roulis, de nombreuses autres configurations sont envisageables.

Ce principe de liaison en carrossage peut en fait être appliqué à tout dispositif de suspension à variation de carrossage des roues, comme par exemple ceux décrits dans les demandes de brevets publiées sous les numéros WO 01/072572, EP 1247663, EP 1275534, WO 04/052666, WO 04/058521 ou WO 05/021294 ou dans les demandes déposées sous les numéros FR 04/06930, FR 04/07409 ou FR 05/04271.

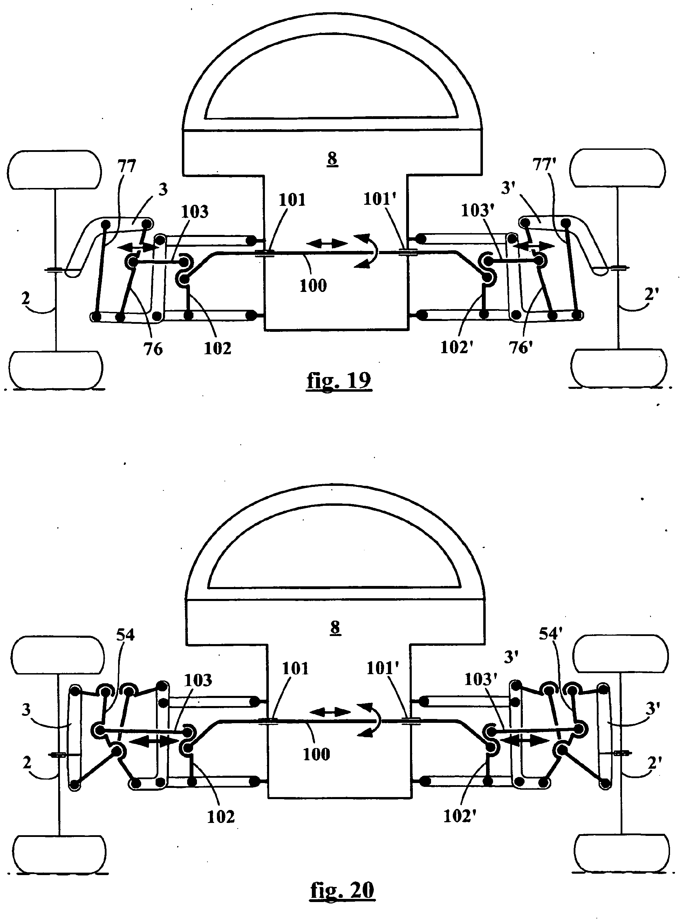

La figure 19 montre l'exemple d'une liaison en carrossage réalisée par l'intermédiaire de la translation de la barre anti-roulis dans le cas d'un dispositif de suspension selon les demandes WO 01/072572, WO 04/058521, FR 04/06930 ou FR 05/04271. Si l'on observe la partie gauche du dessin, on voit que la barre anti-roulis 100 est ici liée par un tirant vertical 102 au bras inférieur et qu'un tirant horizontal 103 lie l'extrémité du tirant vertical à l'une des biellettes de carrossage (ici la biellette intérieure 76). Ainsi, les mouvements de carrossage de la roue 2 (gauche sur cette figure) sont liés à ceux de la roue opposée 2' (droite sur cette figure) par l'intermédiaire de la translation de la barre anti-roulis 100 dans les supports 101 et 101'.

La figure 20 montre l'exemple d'une liaison en carrossage réalisée par l'intermédiaire de la translation de la barre anti-roulis dans le cas d'un dispositif de suspension selon les demandes WO 04/052666, FR 04/07409 ou FR 05/04271. Si l'on observe la partie gauche du dessin, on voit que la barre anti-roulis 100 est ici liée par un tirant vertical 102 au bras inférieur et qu'un tirant horizontal 103 lie l'extrémité du tirant vertical à l'un des leviers de carrossage (ici le levier 54). Ainsi, les mouvements de carrossage de la roue 2 (gauche sur cette figure) sont liés à ceux de la roue opposée 2' (droite sur cette figure) par l'intermédiaire de la translation de la barre anti-roulis 100 dans les supports 101 et 101'.

Dans les différents modes de réalisation, on a représenté un bras inférieur 6 en forme de triangle. Ce triangle peut bien sûr, de manière connue en soi, être remplacé par deux bras disposés en triangle. De même, pour le cas d'une roue non directrice, le bras inférieur peut bien sûr prendre la forme d'un trapèze et assurer à lui seul la tenue en braquage de la roue (c'est à dire sans recourir à une biellette de pince 61). L'expression « bras inférieur » de la présente demande recouvre donc différentes possibilités bien connues de l'homme du métier des suspensions.

Sauf précision supplémentaire, le terme « pivot » tel qu'employé dans la présente demande désigne indifféremment une liaison permettant à la fois une rotation autour d'un axe et une translation selon ce même axe (que l'on désigne généralement « pivot glissant ») et une liaison ne permettant que la rotation autour de l'axe (que l'on désigne généralement « pivot non-glissant »). Le choix du type de pivot peut affecter la transmission des efforts mais n'affecte normalement pas la cinématique du dispositif.

## Revendications

1. Dispositif de suspension (1) d'une roue (2) par rapport à la caisse (8) d'un véhicule, ledit dispositif autorisant un mouvement de suspension sensiblement vertical et un mouvement de carrossage du porte-roue (3) par rapport à la caisse du véhicule, le dispositif comprenant une coulisse (5) et un bras inférieur (6), la coulisse comprenant une partie supérieure (52) et une partie inférieure (51) mobiles l'une par rapport à l'autre, la partie supérieure étant liée à la caisse et la partie inférieure étant liée au porte-roue, le dispositif comprenant en outre un basculeur (4) articulé dans le plan de carrossage d'une part au bras inférieur et d'autre part par l'intermédiaire d'une bielle (7) au porte-roue, le basculeur étant en outre articulé dans le plan de carrossage à la partie inférieure de la coulisse.

2. Dispositif selon la revendication 1, dans lequel la bielle (71) est articulée respectivement au basculeur (4) et au porte-roue (3) par l'intermédiaire de liaisons pivot (27, 28).

3. Dispositif selon la revendication 2, dans lequel la partie inférieure de la coulisse est articulée au porte-roue par l'intermédiaire d'une liaison rotule (251).

4. Dispositif selon la revendication 3, dans lequel la partie inférieure de la coulisse est articulée au basculeur par l'intermédiaire d'une liaison rotule (241), un bras de reprise (53) limitant la rotation de la partie inférieur de la coulisse.

5. Dispositif selon la revendication 2, dans lequel la partie inférieure de la coulisse est articulée au basculeur par l'intermédiaire d'une liaison pivot (243).

6. Dispositif selon l'une des revendications précédentes, dans lequel le bras inférieur est un triangle, le basculeur étant articulé au triangle par l'intermédiaire d'une liaison rotule, le dispositif comprenant en outre une bielle de direction (61) agissant directement sur le basculeur.

7. Dispositif selon l'une des revendications précédentes, dans lequel le ressort de suspension (9) agit au sein de la coulisse.

8. Essieu pour véhicule comprenant pour chaque roue de l'essieu un dispositif de suspension selon l'une des revendications précédentes.

9. Essieu selon la revendication 8 comprenant en outre des moyens de liaison en carrossage rendant le carrossage de chaque roue dépendant du carrossage de l'autre roue de l'essieu.

10. Essieu selon la revendication 9, les moyens de liaison en carrossage assurant en outre la fonction anti-roulis de l'essieu.

## Claims

1. Suspension device (1) for suspending a wheel (2) with respect to the body (8) of a vehicle, the said device allowing a substantially vertical suspension movement and allowing the wheel carrier (3) to move in terms of camber with respect to the body of the vehicle, the device comprising a slide (5) and a lower arm (6), the slide comprising an upper part (52) and a lower part (51) which can move one with respect to the other, the upper part being connected to the body and the lower part being connected to the wheel carrier, the device further comprising a rocker (4) articulated in the camber plane, on the one hand, to the lower arm and, on the other hand, via a link (7) to the wheel carrier, the rocker further being articulated in the camber plane to the lower part of the slide.

2. Device according to claim 1, in which the link (71) is articulated to the rocker (4) and to the wheel carrier (3) via respective pivot joints (27, 28).

3. Device according to claim 2, in which the lower part of the slide is articulated to the wheel carrier via a ball joint (251).

4. Device according to claim 3, in which the lower part of the slide is articulated to the rocker via a ball joint (241), a stay (53) limiting the rotation of the lower part of the slide.

5. Device according to claim 2, in which the lower part of the slide is articulated to the rocker via a pivot joint (243).

6. Device according to one of the preceding claims, in which the lower arm is a wishbone, the rocker being articulated to the wishbone via a ball joint, the device further comprising a steering rod (61) acting directly on the rocker.

7. Device according to one of the preceding claims, in which the suspension spring (9) acts within the slide.

8. Vehicle axle comprising, for each wheel of the axle, a suspension device according to one of the preceding claims.

9. Axle according to claim 8 further comprising camber connecting means that make the camber of each wheel dependent on the camber of the other wheel of that axle.

10. Axle according to claim 9, the camber connecting means further performing the anti-roll function of the axle.

## Patentansprüche

1. Aufhängungsvorrichtung (1) eines Rads (2) bezüglich der Karosserie (8) eines Fahrzeugs, wobei die Vorrichtung eine im Wesentlichen senkrechte Aufhängungsbewegung und eine Radsturzbewegung des Radträgers (3) bezüglich der Karosserie des Fahrzeugs erlaubt, wobei die Vorrichtung eine Führungsschiene (5) und einen unteren Arm (6) enthält, wobei die Führungsschiene einen oberen Teil (52) und einen unteren Teil (51) enthält, die zueinander beweglich sind, wobei der obere Teil mit der Karosserie und der untere Teil mit dem Radträger verbunden ist, wobei die Vorrichtung außerdem einen Kipphebel (4) enthält, der in der Radsturzebene einerseits an den unteren Arm und andererseits mittels einer Schubstange (7) an den Radträger angelenkt ist, wobei der Kipphebel außerdem in der Radsturzebene an den unteren Teil der Führungsschiene angelenkt ist.

2. Vorrichtung nach Anspruch 1, bei der die Schubstange (71) mittels Drehzapfenverbindungen (27, 28) an den Kipphebel (4) bzw. den Radträger (3) angelenkt ist.

3. Vorrichtung nach Anspruch 2, bei der der untere Teil der Führungsschiene mittels einer Kugelgelenkverbindung (251) an den Radträger angelenkt ist.

4. Vorrichtung nach Anspruch 3, bei der der untere Teil der Führungsschiene mittels einer Kugelgelenkverbindung (241) an den Kipphebel angelenkt ist, wobei ein Aufnahmearm (53) die Drehung des unteren Teils der Führungsschiene begrenzt.

5. Vorrichtung nach Anspruch 2, bei der der untere Teil der Führungsschiene mittels einer Drehzapfenverbindung (243) an den Kipphebel angelenkt ist.

6. Vorrichtung nach einem der vorhergehenden Ansprüche, bei der der untere Arm ein Dreieck ist, wobei der Kipphebel mittels einer Kugelgelenkverbindung an das Dreieck angelenkt ist, wobei die Vorrichtung außerdem eine Lenkstange (61) enthält, die direkt auf den Kipphebel einwirkt.

7. Vorrichtung nach einem der vorhergehenden Ansprüche, bei der die Aufhängungsfeder (9) innerhalb der Führungsschiene wirkt.

8. Fahrzeugachse, die für jedes Rad der Achse eine Aufhängungsvorrichtung nach einem der vorhergehenden Ansprüche enthält.

9. Achse nach Anspruch 8, die außerdem Radsturz-Verbindungseinrichtungen enthält, die den Radsturz jedes Rads vom Radsturz des anderen Rads der Achse abhängig machen.

10. Achse nach Anspruch 9, wobei die Radsturz-Verbindungseinrichtungen außerdem die Stabilisatorfunktion der Achse gewährleisten.
